# EUROPÄISCHE PATENTSCHRIFT

(11) **EP 2 412 596 B1**
(45) Veröffentlichungstag und Bekanntmachung des Hinweises auf die Patenterteilung: **12.12.2012**
(21) Anmeldenummer: 11450038.2
(22) Anmeldetag: 17.03.2011
(51) Int. Cl.: B61B 12/00, B61B 12/06

(54) **Seilbahnanlage und Verfahren zu deren Betrieb**
Cable car assembly and method for its operation
Installation de téléphérique et son procédé de fonctionnement

(30) Priorität: 29.07.2010 AT 12752010
(43) Veröffentlichungstag der Anmeldung: 01.02.2012
(73) Patentinhaber: Innova Patent GmbH, 6960 Wolfurt (AT)
(72) Erfinder: Beck, Markus, 6972 Fussach (AT)
(74) Vertreter: Hehenberger, Reinhard

(56) Entgegenhaltungen:
- EP-A1- 0 510 357
- EP-A1- 1 195 305
- EP-A1- 1 671 867
- EP-B1- 1 780 091

## Beschreibung

Die gegenständliche Erfindung betrifft eine Seilbahnanlage mit einem Förderseil, welches in den beiden Endstationen der Seilbahnanlage über jeweils eine Umlenkscheibe geführt ist, und mit an das Förderseil ankuppelbaren Sesseln, welche mit einer Kupplungseinrichtung und mit einem Fahrwerk ausgebildet sind, wobei sie längs der Strecke der Seilbahnanlage an das Förderseil angekuppelt sind, bei der Einfahrt in die Stationen vom Förderseil abgekuppelt, mittels Steuerreifen längs Führungsschienen durch die Stationen hindurchgeführt sowie von den Passagieren bestiegen bzw. verlassen und bei der Ausfahrt aus den Stationen an das Förderseil wieder angekuppelt werden, wobei weiters die Sessel mit mindestens einem Sicherungsbügel ausgebildet sind und bei der Ausfahrt aus den Stationen eine Einrichtung zu dessen Verstellung in die Schließlage und zu dessen Verriegelung sowie eine dieser zugeordnete Einrichtung zur Überprüfung der Verriegelung angeordnet sind.
Die gegenständliche Erfindung betrifft weiters ein Verfahren zum Betrieb einer derartigen Seilbahnanlage.

Aus der EP-1780091 B1 und aus der US-2004/003751 A1 sind mit Sesseln ausgebildete Seilbahnanlagen bekannt, welche bei der Ausfahrt aus den Stationen mit einer Einrichtung versehen sind, durch welche der Sicherungsbügel der Sessel in dessen Schließlage verstellt und verriegelt wird, wobei dieser Einrichtung eine Einrichtung zur Überprüfung der Verriegelung des Sicherungsbügels zugeordnet ist. Sobald durch die Überprüfungseinrichtung festgestellt wird, dass der Sicherungsbügel eines Sessels nicht verriegelt ist, wird die Seilbahnanlage angehalten und wird der betreffende Sicherungsbügel verriegelt. Hierdurch wird jedoch eine Betriebsunterbrechung bedingt.

Beim Betrieb derartiger Seilbahnanlagen wurde festgestellt, dass durch die Einrichtung zur Verstellung des Sicherungsbügels in dessen Schließlage und zu dessen Verriegelung zwar die Schließlage und die Verriegelung nicht immer sofort erreicht werden, worauf durch die dieser Einrichtung zugeordnete Überprüfungseinrichtung eine Anzeige bzw. eine Steuerung erfolgt, dass jedoch unmittelbar darauf aufgrund von Maßnahmen, welche durch die Passagiere getroffen werden, der Sicherungsbügel in die Schließlage gelangt, wobei er jedoch noch verriegelt werden muss. Der gegenständlichen Erfindung liegt die Aufgabe zugrunde, technische Maßnahmen vorzusehen, durch welche hierdurch verursachte Betriebsunterbrechungen weitestgehend vermieden werden.

Um zu vermeiden, dass bei einem Ansprechen der der Einrichtung zur Verstellung des Sicherungsbügels zugeordneten Einrichtung zur Überprüfung der Verriegelung des Sicherungsbügels der Betrieb der Seilbahnanlage unterbrochen werden muss, sind erfindungsgemäß bei der Ausfahrt aus den Stationen in Fahrtrichtung der Sessel im Abstand von der ersten Einrichtung zur Verstellung und Verriegelung des Sicherungsbügels und der dieser zugeordneten Einrichtung zur Überprüfung der Verriegelung des Sicherungsbügels eine zweite Einrichtung zur Verstellung und Verriegelung des Sicherungsbügels und gleichfalls eine dieser zugeordnete Einrichtung zur Überprüfung der Verriegelung des Sicherungsbügels vorgesehen, wobei durch die der ersten Einrichtung zur Verstellung und Verriegelung des Sicherungsbügels zugeordnete Einrichtung zur Überprüfung der Verriegelung des Sicherungsbügels im Falle, dass keine Verriegelung erfolgt ist, die zweite Einrichtung zur Verstellung und Verriegelung des Sicherungsbügels in ihre wirksame Lage gebracht wird.

Sofern der Sicherungsbügel des betreffenden Sessels durch die erste Einrichtung zur Verstellung und Verriegelung des Sicherungsbügels nicht in dessen Schließlage gebracht und verriegelt worden ist, besteht dabei kein Erfordernis, den Betrieb der Seilbahnanlage sofort zu unterbrechen. Vielmehr kann der betreffende Sessel durch die zweite Einrichtung zur Verstellung und Verriegelung des Sicherungsbügels hindurch bewegt werden, worauf die Verriegelung des Sicherungsbügels nochmals überprüft wird. Sofern dann der Sicherungsbügel noch immer nicht verriegelt worden ist, wird der Betrieb der Seilbahnanlage durch die zweite Überprüfungseinrichtung unterbrochen.

Vorzugsweise wird im Fall, dass durch die erste Einrichtung zur Verstellung und Verriegelung des Sicherungsbügels dessen Verriegelung nicht erfolgt ist, durch die der ersten Einrichtung zur Verstellung und Verriegelung des Sicherungsbügels zugeordnete Einrichtung zur Überprüfung der Verriegelung des Sicherungsbügels zudem die Antriebsgeschwindigkeit des betreffenden Sessels vermindert. Vorzugsweise wird hierfür die Fördergeschwindigkeit der gesamten Seilbahnanlage vermindert. Es kann jedoch auch unabhängig vom Betrieb der Seilbahnanlage die Antriebsgeschwindigkeit für die Steuerreifen vermindert werden. Weiters kann im Fall, dass keine Verriegelung des Sicherungsbügels erfolgt ist, durch die der ersten Einrichtung zur Verstellung und Verriegelung des Sicherungsbügels zugeordnete Einrichtung zur Überprüfung der Verriegelung des Sicherungsbügels eine akustische und bzw. oder optische Signalabgabe erfolgen.

Vorzugsweise ist weiters die zweite Einrichtung zur Verstellung und Verriegelung des Sicherungsbügels durch eine Führungsschiene gebildet, welche einer an den Sesseln befindlichen Einrichtung zur Verstellung und Verriegelung des Sicherungsbügels zugeordnet ist und welche aus einer unwirksamen Lage in eine wirksame Lage verschwenkbar ist.

Nach einem bevorzugten Verfahren zum Betrieb einer derartigen Seilbahnanlage wird der Sicherungsbügel des betreffenden Sessels durch die erste Einrichtung zur Verstellung und Verriegelung des Sicherungsbügels verstellt, worauf dessen Verriegelung durch die der ersten Einrichtung zur Verstellung und Verriegelung des Sicherungsbügels zugeordnete Einrichtung zur Überprüfung der Verriegelung des Sicherungsbügels überprüft wird, worauf im Fall, dass der betreffende Sicherungsbügel nicht verriegelt worden ist, die zweite Einrichtung zur Verstellung und Verriegelung des Sicherungsbügels in ihre wirksame Lage gebracht, vorzugsweise die Antriebsgeschwindigkeit des betreffenden Sessels vermindert, und in der Folge durch die der zweiten Einrichtung zur Verstellung und Verriegelung des Sicherungsbügels zugeordnete Einrichtung zur Überprüfung der Verriegelung des Sicherungsbügels die Verriegelung des betreffenden Sessels überprüft wird, wobei im Fall, dass der Sicherungsbügel nicht verriegelt worden ist, der Betrieb der Seilbahnanlage eingestellt wird.

Alternativ dazu kann dann, wenn die erste Überprüfungseinrichtung anspricht, der Betrieb der Seilbahnanlage eingestellt und der Sicherungsbügel des betreffenden Sessels in die Schließlage gebracht werden. Hierauf wird der Betrieb der Seilbahnanlage wieder aufgenommen, wobei die Verriegelung des Sicherungsbügels des betreffenden Sessels durch die zweite Verstelleinrichtung für die Sicherungsbügel erfolgt.

Eine erfindungsgemäße Seilbahnanlage sowie das erfindungsgemäße Verfahren zum Betrieb einer derartigen Seilbahnanlage sind nachstehend anhand eines in der Zeichnung dargestellten Ausführungsbeispieles näher erläutert. Es zeigen:
- FIG.1: eine der Endstationen einer erfindungsgemäßen Seilbahnanlage, wobei sich ein Sessel der Seilbahnanlage in einer ersten Betriebslage befindet, mit zwei Einrichtungen zur Verstellung und Verriegelung des Sicherungsbügels der Sessel, in axonometrischer Darstellung,
- FIG.2: die Endstation gemäß FIG.1, wobei sich der Sessel in einer zweiten Betriebslage befindet und wobei sich die zweite Einrichtung zur Verstellung und Verriegelung des Sicherungsbügels der Sessel, in einer ersten Betriebslage befindet, in axonometrischer Darstellung,
- FIG.3: die Station gemäß FIG.2, wobei sich die zweite Einrichtung zur Verstellung und Verriegelung des Sicherungsbügels der Sessel in einer zweiten Betriebslage befindet, in axonometrischer Darstellung,

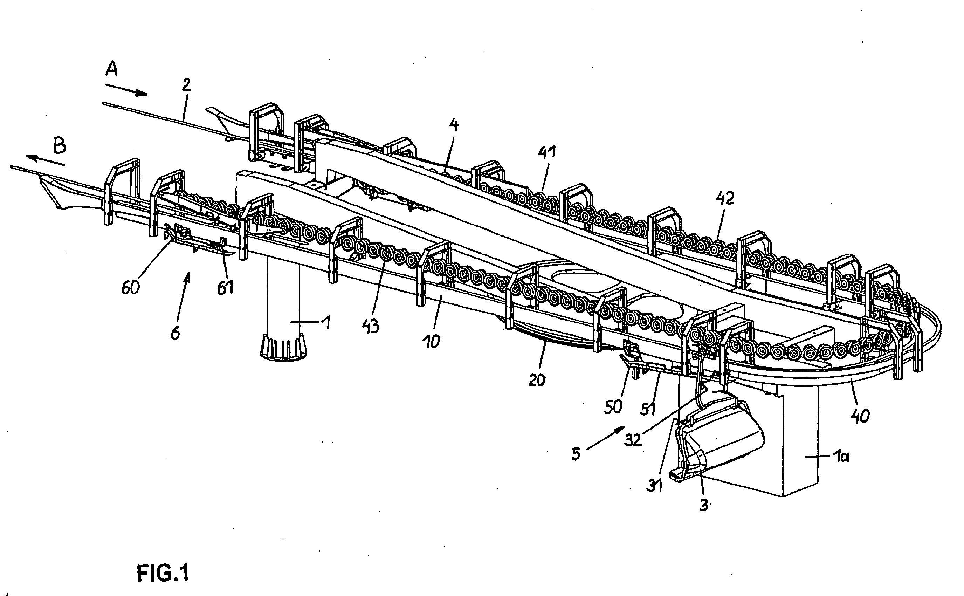

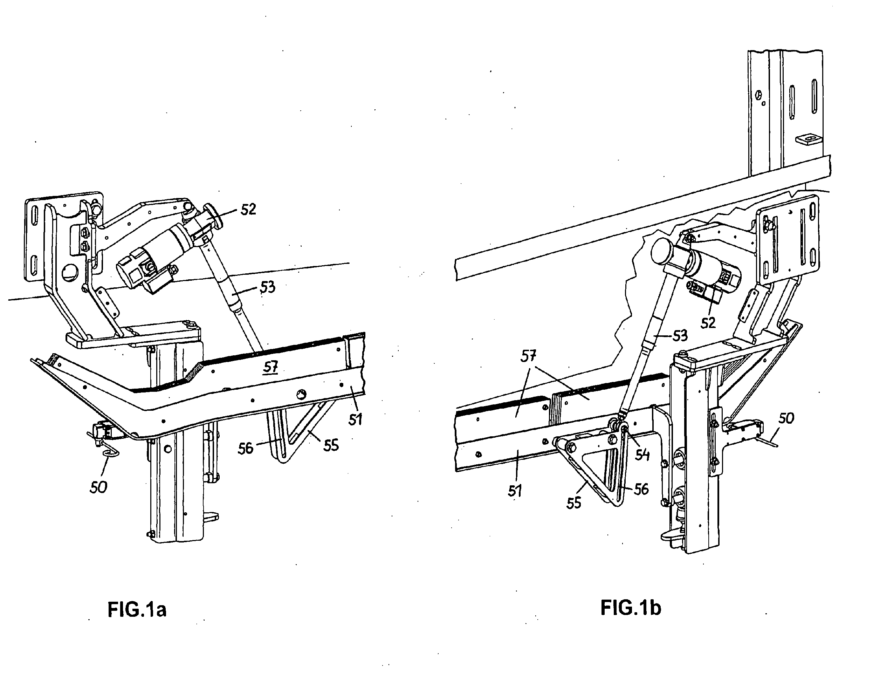

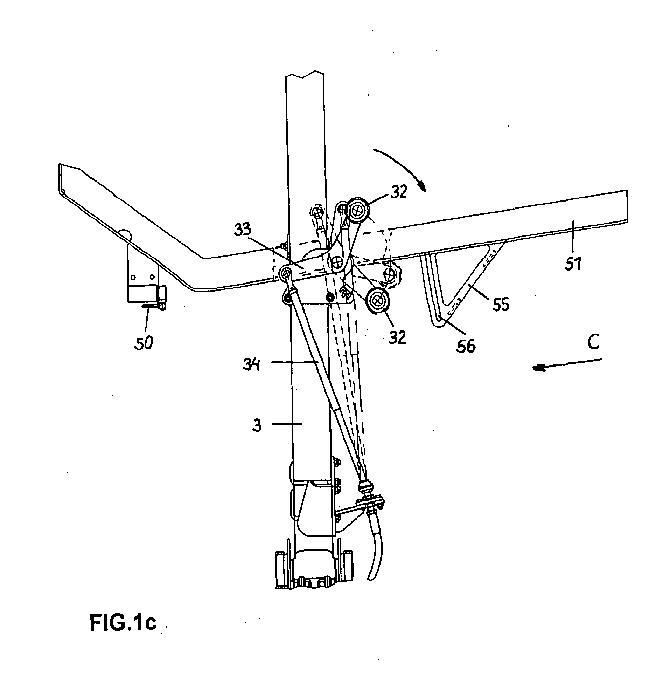

- FIG.1a: ein Detail der FIG.1, in gegenüber FIG.1 vergrößerter Darstellung,
- FIG.1b: das Detail der FIG.1a, von der anderen Seite her gesehen,
- FIG.1c: ein weiteres Detail der FIG.1, in gegenüber FIG.1 vergrößerter Darstellung,

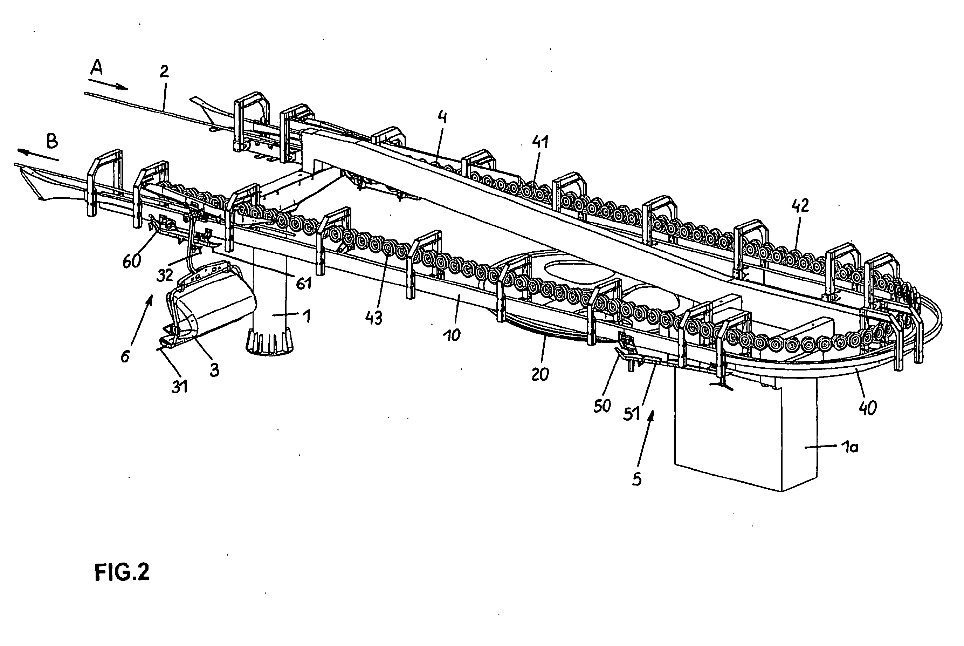

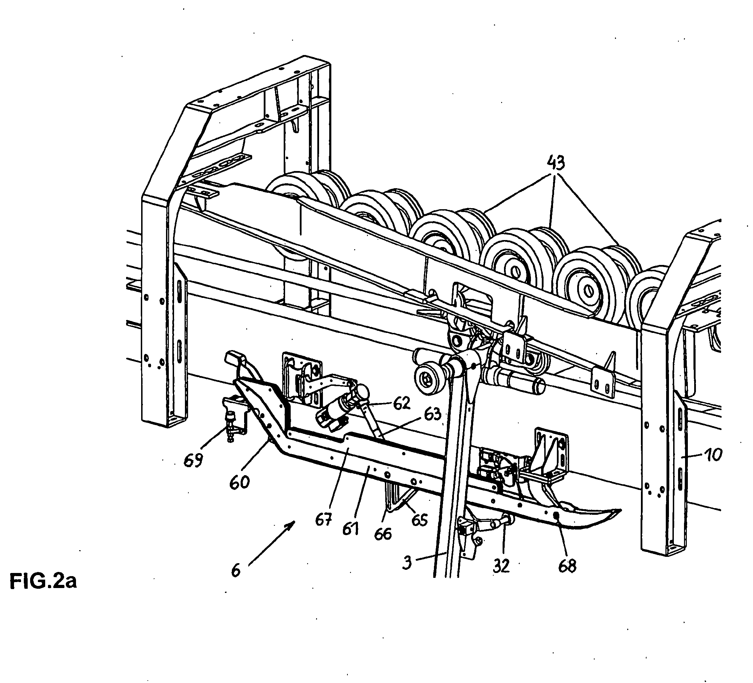

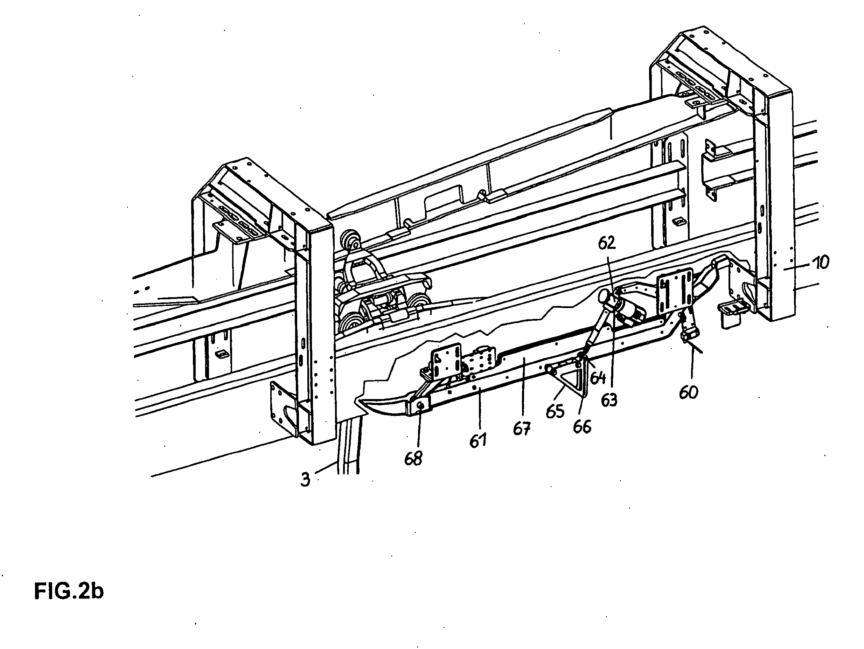

- FIG.2a: ein Detail der FIG.2, in gegenüber FIG.2 vergrößerter Darstellung,
- FIG.2b: das Detail der FIG.2a von der anderen Seite her gesehen,

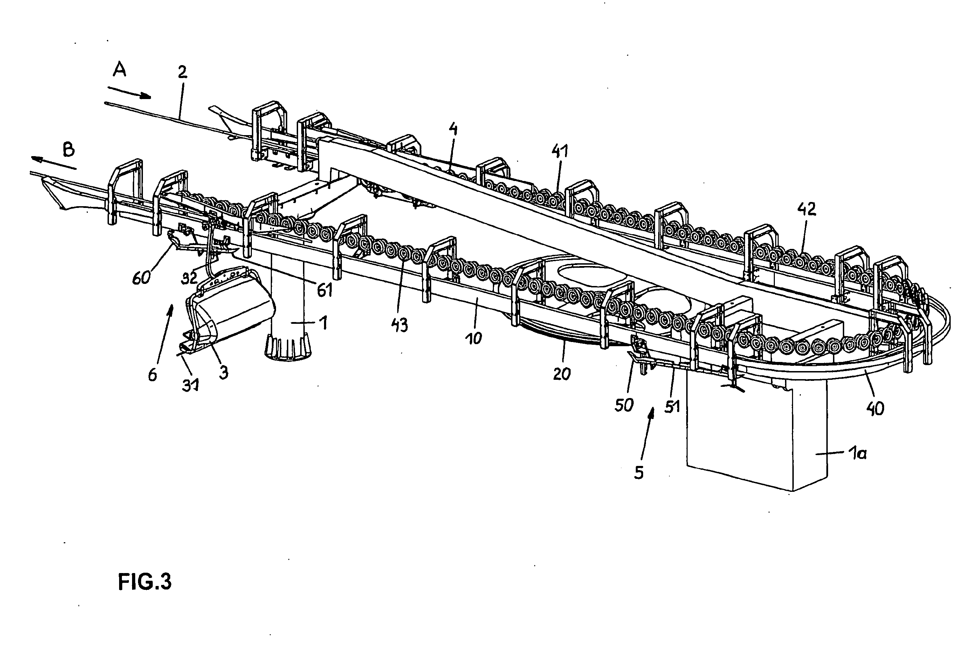

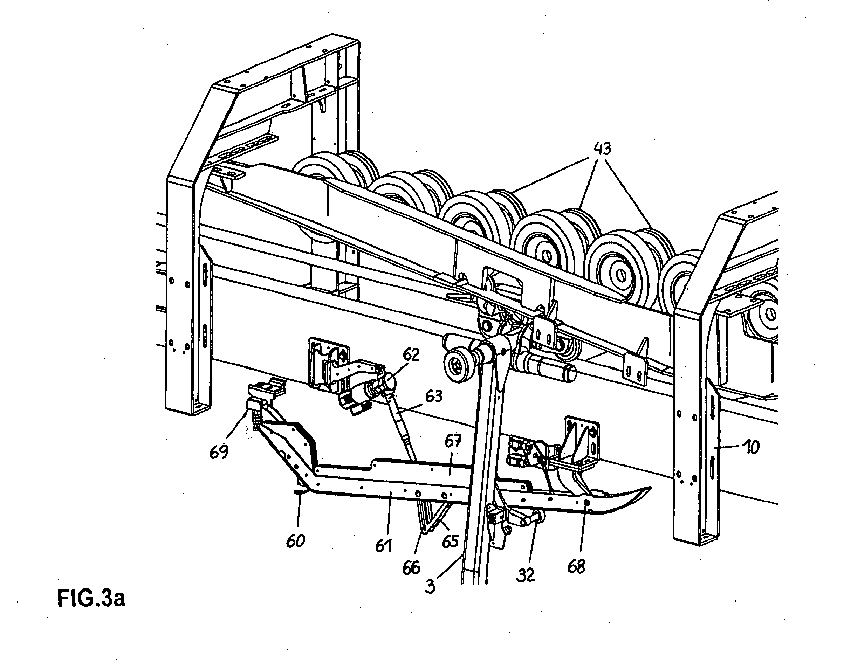

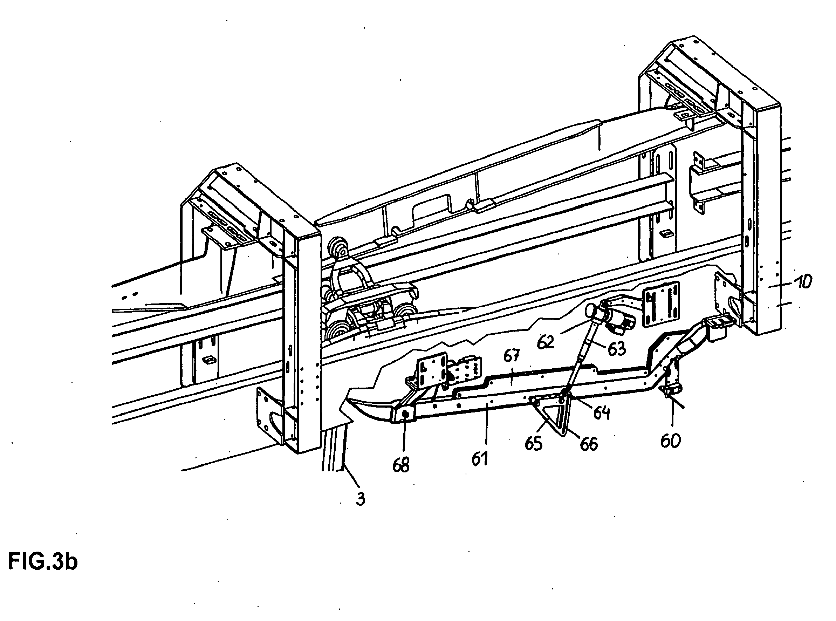

- FIG.3a: ein Detail der FIG.3 in einer gegenüber FIG.3 vergrößerten Darstellung, und
- FIG.3b: das Detail der FIG.3a von der anderen Seite her gesehen.

Die in FIG.1 dargestellte Endstation einer Seilbahnanlage weist eine von Stützen 1 und 1a getragene Tragkonstruktion 10 auf, an welcher eine Seilumlenkscheibe 20 für ein Förderseil 2 der Seilbahnanlage um eine zumindest angenähert vertikale Achse drehbar gelagert ist. Der Antrieb des Förderseiles 2 erfolgt über zumindest eine der in der Seilbahnanlage befindlichen Umlenkscheiben 20. Längs der Strecke der Seilbahnanlage sind an das Förderseil 2 eine Vielzahl von Sesseln 3 angekuppelt. Die Bewegungsrichtung des Förderseiles 2 ist durch Pfeile A und B angedeutet. Bei der Einfahrt der Sessel 3 in die Endstation werden diese vom Förderseil 2 abgekuppelt, worauf sie mittels Steuerreifen 4 längs einer Führungsschiene 40 durch diese Station hindurch bewegt werden. Der Antrieb der Steuerreifen 4 erfolgt dadurch, dass diese mit mindestens einer Tragrolle des Förderseiles 2 auf Mitnahme gekuppelt sind. Dabei dienen die Steuerreifen 4 einer ersten Gruppe als Verzögerungsreifen 41, mittels welcher die Geschwindigkeit der Sessel 3 von z.B. 6m/sec auf z.B. 0,3m/sec vermindert wird. Mittels der Steuerreifen 4 einer zweiten Gruppe, welche als Förderreifen 42 dienen, werden die Sessel 3 mit einer Geschwindigkeit von etwa 0,3m/sec durch einen Einstiegs- bzw. Ausstiegsbereich für die Passagiere hindurch bewegt, wobei sie von den Passagieren bestiegen bzw. verlassen werden. Mittels der Steuerreifen 4 einer dritten Gruppe, welche als Beschleunigungsreifen 43 dienen, werden die Sessel 3 auf eine Geschwindigkeit von z.B. 6m/sec beschleunigt, worauf sie bei der Ausfahrt aus der Station wieder an das Förderseil 2 angekuppelt werden.

Bei bekannten derartigen Seilbahnanlagen sind die Sessel 3 mit einem Sicherungsbügel 31 ausgebildet, welcher dann, sobald die Sessel 3 von Passagieren bestiegen worden sind, in dessen Schließlage verstellt und verriegelt wird und welcher dazu dient, ein Abgleiten der Passagiere von den Sesseln 3 zu verhindern. Zur Verstellung des Sicherungsbügels 31 in dessen Schließlage und zu dessen Verriegelung dient eine an der Tragkonstruktion 10 vorgesehene erste Verstelleinrichtung 5. Die Verstelleinrichtung 5 weist eine schräg zur Bewegungsrichtung der Sessel 3 ausgerichtete Steuerschiene 51 auf, längs welcher eine am Sessel 3 befindliche Steuerrolle 32 abläuft, wodurch die Steuerrolle 32 verschwenkt wird, wobei durch diese Schwenkbewegung der Sicherungsbügel 31 in seine Schließlage gebracht und in dieser verriegelt wird.

Eine derartige Einrichtung ist in der EP 1780091 B1 geoffenbart.

In der Bewegungsbahn der Steuerrolle 32 ist weiters ein Sensor 50 z.B. in Form eines verschwenkbaren Stabes vorgesehen, von welchen dann, wenn sich die Steuerrolle 32 in derjenigen verschwenkten Lage befindet, in welcher sich der Sicherungsbügel 31 in seiner Schließlage befindet und verriegelt ist, ein Steuersignal abgegeben wird. Sofern demgegenüber deshalb, da sich die Steuerrolle 32 nicht in dieser Schwenklage befindet, nicht gesichert ist, dass sich der Sicherungsbügel 31 in seiner Schließlage befindet und er auch nicht verriegelt ist, durch den Sensor 50 kein Signal abgegeben wird, wird bei der bekannten Seilbahnanlage deren Betrieb unterbrochen.

Beim Betrieb von derartigen Seilbahnanlagen kann jedoch der Fall eintreten, dass der Sicherungsbügel 31 erst nach dem Passieren des Sensors 50 in die Schließlage gelangt, wobei dann eine Unterbrechung des Betriebes nicht erforderlich ist, sofern auch die Steuerrolle 32 in diejenige Schwenklage verstellt wird, in welcher der Sicherungsbügel 31 verriegelt ist.

Wie dies aus den FIG.1, FIG.2 und FIG.3 ersichtlich ist, ist bei einer erfindungsgemäßen Seilbahnanlage in der Seilbahnstation nach der ersten Einrichtung 5 zur Verstellung des Sicherungsbügels 31 in die Schließlage und dessen Verriegelung eine zweite derartige Verstelleinrichtung 6 vorgesehen, welche gleichfalls mit einer Steuerschiene 61 ausgebildet ist und durch deren wirksame Lage die Steuerrolle 32 dann, wenn sie sich nicht in derjenigen Schwenklage befindet, in welcher der Sicherungsbügel 31 in seine Schließlage gebracht und verriegelt ist, in diese Lage verschwenkt wird.
Weiters ist auch dieser zweiten Verstelleinrichtung 6 ein Sensor 60 z.B. in Form eines verschwenkbaren Stabes zugeordnet, durch welchen die Schwenklage der Steuerrolle 32 und damit die Schließlage und die Verriegelung des Sicherungsbügels 31 überprüft werden. Sofern sich die Steuerrolle 32 auch nach dem Passieren der zweiten Verstelleinrichtung 6 nicht in derjenigen Schwenklage befindet, in welcher sich der Sicherungsbügel 31 in seiner Schließlage befindet und verriegelt worden ist, wird die Seilbahnanlage abgestellt.

In den FIG.1 1 und FIG.2 befindet sich die zweite Verstelleinrichtung 6 für den die Sicherungsbügel 31 in ihrer nicht wirksamen Lage. Demgegenüber befindet sich in FIG.3 die zweite Verstelleinrichtung 6 in ihrer wirksamen Lage.

In den FIG.1a und FIG.1b sind Teile der ersten Verstelleinrichtung 5 vergrößert dargestellt. Wie daraus ersichtlich ist, ist die Steuerschiene 51 mittels eines Verstellmotors 52 um eine zumindest angenähert horizontal ausgerichtete Achse in einer vertikalen Ebene verschwenkbar. Hierfür dient eine Teleskopstange 53, welche mittels des Antriebsmotors 52 in ihrer Längsrichtung verstellbar ist und welche an ihrem vom Antriebsmotor 52 abgewandten Ende mit einem quer ausgerichteten Führungsbolzen 54 ausgebildet ist. An der Steuerschiene 51 ist eine dreieckige Tragplatte 55 befestigt, welche mit einem Führungssschlitz 56 ausgebildet ist, der vom Führungsbolzen 54 durchsetzt ist. Auf der Steuerschiene 51 befinden sich zudem mehrere als Gewichte dienende Balken 57, durch welche die Steuerschiene 51 in ihre durch die Teleskopstange 53 bestimmte jeweils unterste Lage verschwenkt wird. Sofern der Sicherungsbügel 31 des betreffenden Sessels 3 aufgrund eines Hindernisses am Sessel 3, z.B. aufgrund des Rucksackes eines Passagiers, nicht in seine Schließstellung gelangt, wird die Steuerschiene 51 durch die Steuerrolle 32 entgegen der Wirkung der Gewichtsbalken 57 angehoben, was deshalb möglich ist, da der Führungsbolzen 54 im Führungsschlitz 56 verstellbar ist. An dem in Bewegungsrichtung der Sessel 3 befindlichen Ende der Steuerschiene 51 befindet sich der Sensor 50.

Während des Förderbetriebes der Seilbahnanlage befindet sich die Verstelleinrichtung 5 immer in ihrer wirksamen Lage. Für die Rückwärtsfahrt der Sessel 3 wird die Steuerschiene 51 mittels des Antriebsmotors 52 in ihre obere unwirksame Lage verschwenkt.

Aus FIG.1c sind drei Lagen der am Sessel 3 befindlichen Steuerrolle 32 ersichtlich. Die Steuerrolle 32 ist auf einem abgewinkelten Stellhebel 33 gelagert, der zwischen einer ersten oberen Schwenklage und einer zweiten unteren Schwenklage verstellbar ist. An den Stellhebel 33 ist ein Bowdenzug 34 angelenkt, durch welchen der Sicherungsbügel 31 des Sessels 3 verstellbar und verriegelbar ist. Sobald die Steuerrolle 32 in Richtung des Pfeiles C auf die Verriegelungsschiene 51 aufläuft, wird der Stellhebel 33 mit der Steuerrolle 32 im Uhrzeigersinn verschwenkt, wodurch der Sicherungsbügel 31 in seine Schließlage verschwenkt wird. In der Folge gelangt der Steuerhebel 33 mit der Steuerrolle 32 in eine Übertotpunktlage, wodurch der Sicherungsbügel 31 in der Schließlage verriegelt wird.

Sofern jedoch der Sicherungsbügel 31 aufgrund eines am Sessel 3 befindlichen Hindernisses nicht in diejenige Lage verstellt werden kann, in welcher sich die Steuerrolle 32 in der Übertotpunktlage befindet und der Sicherungsbügel 31 verriegelt ist, nimmt der Stellhebel 33 mit der Steuerrolle 32 eine mittlere Lage ein, welche strichliert dargestellt ist. Die Verriegelung des Sicherungsbügels 31 kann erst dann erfolgen, sobald das Hindernis für die Verstellung des Sicherungsbügels 31 entfernt worden ist.
Sofern sich die Steuerrolle 32 in derjenigen unteren Schwenklage befindet, in welcher der Sicherungsbügel 31 verriegelt ist, wird durch deren Bewegung der Sensor 50 betätigt, sodass durch diesen ein Steuersignal dahingehend abgegeben wird, dass der Betrieb der Seilbahnanlage weitergeführt wird. Demgegenüber wird in jeglichen anderen Schwenklagen der Steuerrolle 32 durch den Sensor 50 kein Steuersignal bewirkt, worauf die zweite Steuerschiene 61 in ihre wirksame Lage verschwenkt wird und vorzugsweise die Antriebsgeschwindigkeit der Seilbahnanlage vermindert wird.

Wie dies aus den FIG.2a und FIG.2b bzw. FIG.3a und FIG.3b ersichtlich ist, weist auch die zweite Verstelleinrichtung 6 für die Sicherungsbügel 31 eine Steuerschiene 61 auf, welche sich in der Bewegungsrichtung der Sessel 3 erstreckt und welche mittels eines Antriebsmotors 62 um eine gestellfeste Achse 68 höhenverschwenkbar ist. Auch bei dieser Verstelleinrichtung 6 ist die Steuerschiene 61 mit dem Antriebsmotor 62 über eine Teleskopstange 63 und einen quer ausgerichteten Führungsbolzen 64, welcher einen in einer an der Steuerschiene 61 befestigten Tragplatte 65 vorgesehenen Führungsschlitz 66 durchsetzt und in diesem geführt ist, gekuppelt. Weiters ist auch diese Steuerschiene 61 mit Gewichtsbalken 67 ausgebildet.

In der Regel befindet sich die Steuerschiene 61 in einer ersten Schwenklage, welche in den FIG.2a und FIG.2b dargestellt ist. Es ist dies die unwirksame obere Lage dieser Steuerschiene 61, in welcher die Steuerrollen 32 der Sessel 3 auf diese nicht auflaufen. Sofern demgegenüber die Steuerschiene 61 in eine zweite untere Schwenklage gebracht worden ist, welche in den FIG.3 FIG.3a und FIG.3b dargestellt ist, befindet sie sich in ihrer wirksamen Lage, in welcher die am betreffenden Sessel 3 befindliche Steuerrolle 32 auf diese aufläuft, wodurch sie verschwenkt wird und wodurch der Sicherungsbügel 31 des betreffenden Sessels 3, sofern er sich nicht in der Schließlage befindet, in diese gebracht wird und verriegelt wird.

Die Schwenkbewegung der Steuerschiene 61 ist durch einen verstellbaren Anschlag 69 begrenzt. Weiters befindet sich an der Steuerschiene 61 der Sensor 60 z.B. in Form eines Steuerstabes, welcher dann, wenn sich die Steuerrolle 32 in derjenigen Schwenklage befindet, in welcher der Sicherungsbügels 31 verriegelt ist, betätigt wird, wodurch ein Steuersignal dahingehend abgegeben wird, dass sich der Sicherungsbügel 31 des betreffenden Sessels 3 in seiner Schließlage befindet und in dieser verriegelt ist, sodass der Betrieb der Seilbahnanlage weitergeführt werden kann.

Der Betrieb dieser Seilbahnanlage ist wie folgt:
Sobald ein Sessel 3 mittels der Förderreifen 42 durch den Zustiegs- bzw. Ausstiegsbereich hindurch bewegt worden ist, gelangt er zur ersten Verstelleinrichtung 5 für den Sicherungsbügel 31, wobei die am Sessel 3 befindliche Steuerrolle 32 für den Sicherungsbügel 31 auf die Steuerschiene 51 aufläuft und verschwenkt wird, wodurch der Sicherungsbügel 31 in dessen Schließlage verstellt und in dieser verriegelt wird. In der Folge wird durch die Steuerrolle 32 der Sensor 50 betätigt, durch welchen ein Signal dahingehend abgegeben wird, dass der Betrieb der Seilbahnanlage weitergeführt werden kann. Hierauf wird der betreffende Sessel 3 mittels der Beschleunigungsreifen 43 mit ansteigender Geschwindigkeit bis zur Ausfahrt der Seilbahnstation weiter bewegt, worauf er an das Förderseil 2 angekuppelt wird.
Die zweite Verstelleinrichtung 6 für die Sicherungsbügel 31 befindet sich dabei in ihrer nicht wirksamen Lage.

Sobald jedoch durch den der ersten Verstelleinrichtung 5 für die Sicherungsbügel 31 zugeordneten Sensor 50 bei der Vorbeifahrt des betreffenden Sessels 3 deshalb, da sich die Steuerrolle 32 nicht in derjenigen Schwenklage befindet, in welcher sich der Sicherungsbügel 31 in seiner Schließlage befindet und verriegelt ist, nicht betätigt wird und deshalb vom Sensor 50 kein Betriebssignal abgegeben wird, wird einerseits die zweite Verstelleinrichtung 6 für den Sicherungsbügel 31 dadurch aktiviert, dass die Steuerschiene 61 mittels des Verstellmotors 62 in die zweite Schwenklage gebracht wird, und wird andererseits die Geschwindigkeit des Förderseiles 2 und damit die Antriebsgeschwindigkeit der mit dem Förderseil 2 auf Mitnahme gekuppelten Beschleunigungsreifen 43 vermindert. Durch die Verschwenkung der Steuerschiene 61 gelangt diese in die Bewegungsbahn der am betreffenden Sessel 3 befindlichen Steuerrolle 32, wodurch diese verschwenkt wird, wobei durch diese Verschwenkung der Sicherungsbügel 31, sofern er sich nicht in der Schließlage befindet, in diese gebracht wird und weiters der Sicherungsbügel 31 verriegelt wird. Durch den der zweiten Verstelleinrichtung 6 zugeordneten Sensor 60 wird die Schwenklage der Steuerrolle 32 überprüft. Sofern sich die Steuerrolle 32 in derjenigen Schwenklage befindet, in welcher der Sicherungsbügel 31 verriegelt ist, wird der zweite Sensor 60 betätigt. Hierdurch wird ein Betriebssignal abgegeben, durch welches der Normalbetrieb der Seilbahnanlage wieder aufgenommen wird. Sofern demgegenüber durch den Sensor 60 deshalb kein Betriebssignal abgegeben wird, da sich die Steuerrolle 32 nicht in der für die Verriegelung des Sicherungsbügels 31 erforderlichen Schwenklage befindet, wird die Seilbahnanlage abgestellt.

Sofern sich die zweite Verstelleinrichtung 6 im Bereich der Förderreifen 42 befindet, besteht kein Erfordernis, bei einem Ansprechen des der ersten Verstelleinrichtung 5 zugeordneten Sensors 50 die Antriebsgeschwindigkeit der Seilbahnanlage zu vermindern. Sofern jedoch die Sessel 3 zwischen der ersten Verstelleinrichtung 5 und der zweiten Verstelleinrichtung 6 beschleunigt werden, besteht bei einem Ansprechen des Sensors 50 das Erfordernis, diejenige Geschwindigkeit, mit welcher der betreffende Sessel 3 durch die zweite Verstelleinrichtung 6 hindurch geführt wird, gegenüber der normalen Betriebsgeschwindigkeit zu vermindern.

Alternativ dazu kann dann, wenn von dem der ersten Verstelleinrichtung 5 zugeordneten Sensor 50 kein Signal abgegeben wird, der Betrieb der Seilbahnanlage eingestellt werden und kann der Sicherungsbügel 31 des betreffenden Sessels 3 in seine Schließlage gebracht werden. Sobald der Betrieb der Seilbahnanlage wieder aufgenommen wird, läuft die Steuerrolle 32 auf die zweite Verriegelungsschiene 61 auf, wodurch die Steuerrolle 32 in ihre Übertotpunktlage verschwenkt und hierdurch der Sicherungsbügel 31 verriegelt wird.

## Patentansprüche

1. Seilbahnanlage mit einem Förderseil (2), welches in den beiden Endstationen der Seilbahnanlage über jeweils eine Umlenkscheibe (20) geführt ist, und mit an das Förderseil (2) ankuppelbaren Sesseln (3), welche mit einer Kupplungseinrichtung und mit einem Fahrwerk ausgebildet sind, wobei sie längs der Strecke der Seilbahnanlage an das Förderseil (2) angekuppelt sind, bei der Einfahrt in die Stationen vom Förderseil (2) abgekuppelt, mittels Steuerreifen (4) längs Führungsschienen (40) durch die Stationen hindurch geführt sowie von den Passagieren bestiegen bzw. verlassen und bei der Ausfahrt aus den Stationen an das Förderseil (2) wieder angekuppelt werden, wobei weiters die Sessel (3) mit mindestens einem Sicherungsbügel (31) ausgebildet sind und bei der Ausfahrt aus den Stationen eine Einrichtung zu dessen Verstellung in die Schließlage und zu dessen Verriegelung sowie eine dieser zugeordnete Einrichtung (50) zur Überprüfung der Verriegelung angeordnet sind, **dadurch gekennzeichnet, dass** bei der Ausfahrt aus den Stationen in Fahrtrichtung der Sessel (3) im Abstand von der ersten Einrichtung (5) zur Verstellung und Verriegelung des Sicherungsbügels (31) und der dieser zugeordneten Einrichtung (50) zur Überprüfung der Verriegelung des Sicherungsbügels (31) eine zweite Einrichtung (6) zur Verstellung und Verriegelung des Sicherungsbügels (31) und gleichfalls eine dieser zugeordnete Einrichtung (60) zur Überprüfung der Verriegelung des Sicherungsbügels (31) vorgesehen ist, wobei durch die der ersten Einrichtung (5) zur Verstellung und Verriegelung des Sicherungsbügels (31) zugeordnete Einrichtung (50) zur Überprüfung der Verriegelung des Sicherungsbügels (31) im Falle, dass keine Verriegelung erfolgt ist, die zweite Einrichtung (6) zur Verstellung und Verriegelung des Sicherungsbügels (31) in ihre wirksame Lage gebracht wird.

2. Seilbahnanlage nach Patentanspruch 1, **dadurch gekennzeichnet, dass** im Fall, dass durch die erste Einrichtung zur Verstellung und Verriegelung des Sicherungsbügels (31) keine Verriegelung des Sicherungsbügels (31) erfolgt ist, durch die der ersten Einrichtung (5) zur Verstellung und Verriegelung des Sicherungsbügels (31) zugeordnete Einrichtung (50) zur Überprüfung der Verriegelung des Sicherungsbügels (31 zudem die Antriebsgeschwindigkeit des betreffenden Sessels (3) vermindert wird.

3. Seilbahnanlage nach einem der Patentansprüche 1 und 2, **dadurch gekennzeichnet, dass** im Fall, dass durch die erste Einrichtung zur Verstellung und Verriegelung des Sicherungsbügels (31) keine Verriegelung des Sicherungsbügels (31) erfolgt ist, durch die der ersten Verstelleinrichtung (5) zugeordnete Einrichtung (50) zur Überprüfung der Verriegelung des betreffenden Sicherungsbügels (31) eine akustische und bzw. oder optische Signalabgabe erfolgt.

4. Seilbahnanlage nach einem der Patentansprüche 1 bis 3, **dadurch gekennzeichnet, dass** die zweite Einrichtung (6) zur Verstellung und Verriegelung des Sicherungsbügels (31) eine Steuerschiene (61) aufweist, welche einer an den Sesseln (3) angeordneten Steuerrolle (32) für die Sicherungsbügel (31) zugeordnet ist und dass diese Steuerschiene (61) aus einer unwirksamen Lage in eine wirksame Lage verschwenkbar ist.

5. Verfahren zum Betrieb einer Seilbahnanlage nach einem der Patentansprüche 1 bis 4, **dadurch gekennzeichnet, dass** der Sicherungsbügel (31) des betreffenden Sessels (3) durch die erste Einrichtung (5) zur Verstellung und Verriegelung des Sicherungsbügels (31) verstellt und verriegelt wird, worauf dessen Verriegelung durch die der ersten Einrichtung (5) zur Verstellung und Verriegelung des Sicherungsbügels (31) zugeordnete Einrichtung (50) zur Überprüfung der Verriegelung des Sicherungsbügels (31) überprüft wird und im Fall, dass der betreffende Sicherungsbügel (31) nicht in seine Schließlage gebracht und verriegelt worden ist, die zweite Einrichtung (6) zur Verstellung und Verriegelung des Sicherungsbügels (31) in ihre wirksame Lage gebracht, vorzugsweise die Antriebsgeschwindigkeit für die Steuerreifen (4) vermindert wird, und in der Folge durch die der zweiten Einrichtung (6) zur Verstellung und Verriegelung des Sicherungsbügels (31) zugeordnete Einrichtung (60) zur Überprüfung der Verriegelung des Sicherungsbügels (31) die Verriegelung des Sicherungsbügels (31) des betreffenden Sessels (3) überprüft wird, wobei im Fall, dass dieser nicht verriegelt worden ist, der Betrieb der Seilbahnanlage eingestellt wird.

## Claims

1. An aerial cableway installation having a hauling cable (2), which is guided in the two end stations of the aerial cableway installation in each case over a return pulley (20) and having chairs (3) couplable to the hauling cable (2), which chairs are provided with a coupling means and with a travelling gear, said chairs being coupled to the hauling cable (2) along the path of the aerial cableway installation, uncoupled from the hauling cable (2) on entry into the stations, guided along guide rails (40) through the stations by means of control tyres (4) and boarded or alighted from by the passengers, and coupled back onto the hauling cable (2) on exit from the stations, the chairs (3) being further provided with at least one safety bar (31), a means being provided on exit from the stations for adjusting said bar into the closed position and locking it and a means (50) associated therewith being provided to verify the locking, **characterised in that**, on exit from the stations in the direction of travel of the chairs (3), there is provided, at a distance from the first means (5) for adjusting and locking the safety bar (31) and the means (50) associated therewith for verifying locking of the safety bar (31), a second means (6) for adjusting and locking the safety bar (31) and likewise a means (60) associated therewith for verifying locking of the safety bar (31), the second means (6) for adjusting and locking the safety bar (31) being brought into its active position by the means (50) verifying locking of the safety bar (31), associated with the first means (5) for adjusting and locking the safety bar (31), in the event of locking not having been brought about.

2. An aerial cableway installation according to claim 1, **characterised in that**, in the event of locking of the safety bar (31) not having been brought about by the first means for adjusting and locking the safety bar (31), the drive speed of the chair (3) in question is additionally reduced by the means (50) for verifying locking of the safety bar (31) associated with the first means (5) for adjusting and locking the safety bar (31).

3. An aerial cableway installation according to either one of claims 1 and 2, **characterised in that**, in the event of locking of the safety bar (31) not having been brought about by the first means for adjusting and locking the safety bar (31), an acoustic and/or optical signal is output by the means (50) for verifying locking of the safety bar (31) in question associated with the first adjusting means (5).

4. An aerial cableway installation according to any one of claims 1 to 3, **characterised in that** the second means (6) for adjusting and locking the safety bar (31) comprises a control rail (61), which is associated with a control roller (32) for the safety bar (31) arranged on the chairs (3), and **in that** this control rail (61) is swivellable from an inactive position into an active position.

5. A method of operating an aerial cableway installation according to any one of claims 1 to 4, **characterised in that** the safety bar (31) of the chair (3) in question is adjusted and locked by the first means (5) for adjusting and locking the safety bar (31), whereupon locking thereof is verified by the means (50) for verifying locking of the safety bar (31) associated with the first means (5) for adjusting and locking the safety bar (31) and, in the event of the safety bar (31) in question not having been brought into and locked in its closed position, the second means (6) for adjusting and locking the safety bar (31) is brought into its active position, preferably the drive speed for the control tyres (4) is reduced, and subsequently locking of the safety bar (31) of the chair (3) in question is verified by the means (60) for verifying locking of the safety bar (31) associated with the second means (6) for adjusting and locking the safety bar (31), operation of the aerial cableway installation being stopped in the event of said bar not having been locked.

## Revendications

1. Téléphérique avec un câble porteur (2) qui, dans chacune des deux stations d'extrémité du téléphérique, passe sur une poulie de renvoi (20), et avec des nacelles (3), aptes à être accouplées au câble porteur (2), qui sont pourvues d'un dispositif d'accouplement et d'un châssis, étant précisé qu'elles sont accouplées au câble porteur (2) le long du trajet du téléphérique, que lorsqu'elles entrent dans les stations, elles sont désaccouplées du câble porteur (2), qu'elles traversent lesdites stations le long de rails de guidage (40) à l'aide de pneus de commande (4) et que les passagers montent sur les nacelles et en descendent, et que lorsqu'elles sortent des stations, elles sont à nouveau accouplées au câble porteur (2), et étant précisé que les nacelles (3) sont également pourvues d'au moins un arceau de sécurité (31) et qu'il est prévu à la sortie des stations un dispositif pour amener cet arceau (31) en position fermée et pour le verrouiller, ainsi qu'un dispositif (50), associé à ce dispositif, pour vérifier le verrouillage,
**caractérisé en ce qu'**à la sortie des stations, dans le sens de déplacement des nacelles (3), il est prévu à une certaine distance du premier dispositif (5) pour déplacer et verrouiller l'arceau de sécurité (31) et du dispositif (50), associé au dispositif (5), pour vérifier le verrouillage de l'arceau de sécurité (31), un second dispositif (6) pour déplacer et verrouiller ledit arceau de sécurité (31), ainsi qu'un dispositif (60), associé au dispositif (6), pour vérifier le verrouillage de l'arceau de sécurité (31), étant précisé que grâce au dispositif (50), associé au premier dispositif (5) pour déplacer et verrouiller l'arceau de sécurité (31), pour vérifier le verrouillage dudit arceau (31), au cas où il n'y a pas eu de verrouillage le second dispositif (6) pour déplacer et verrouiller l'arceau de sécurité (31) est amené dans sa position active.

2. Téléphérique selon la revendication 1, **caractérisé en ce qu'**au cas où il n'y a pas eu de verrouillage de l'arceau de sécurité (31) par le premier dispositif pour déplacer et verrouiller ledit arceau (31), la vitesse d'entraînement de la nacelle (3) concernée est en outre réduite par le dispositif (50), associé au premier dispositif (5) pour déplacer et verrouiller l'arceau de sécurité (31), pour vérifier le verrouillage dudit arceau (31).

3. Téléphérique selon l'une des revendications 1 et 2, **caractérisé en ce qu'**au cas où il n'y a pas eu de verrouillage de l'arceau de sécurité (31) par le premier dispositif pour déplacer et verrouiller ledit arceau, une émission de signal acoustique et/ou optique a lieu grâce au dispositif (50), associé au premier dispositif de déplacement (5), pour vérifier le verrouillage de l'arceau de sécurité (31) concerné.

4. Téléphérique selon l'une des revendications 1 à 3, **caractérisé en ce que** le second dispositif (6) pour déplacer et verrouiller l'arceau de sécurité (31) comporte un rail de commande (61) qui est associé à un galet de commande (32), disposé sur les nacelles (3), pour les arceaux (31), et **en ce que** ce rail de commande (61) est apte à pivoter pour passer d'une position inactive à une position active.

5. Procédé pour faire fonctionner un téléphérique selon l'une des revendications 1 à 4, **caractérisé en ce que** l'arceau de sécurité (31) de la nacelle (3) concernée est déplacé et verrouillé par le premier dispositif (5) pour déplacer et verrouiller ledit arceau (31), après quoi le verrouillage de ce dernier est vérifié par le dispositif (50), associé au premier dispositif (5) pour déplacer et verrouiller l'arceau de sécurité (31), pour vérifier le verrouillage de l'arceau (31), et au cas où l'arceau (31) concerné n'a pas été amené et verrouillé dans sa position fermée, le second dispositif (6) pour déplacer et verrouiller l'arceau (31) est amené dans sa position active, de préférence la vitesse d'entraînement pour les pneus de commande (4) est réduite, et grâce au dispositif (60), associé au second dispositif (6) pour déplacer et verrouiller l'arceau de sécurité (31), pour vérifier le verrouillage de l'arceau (31), le verrouillage dudit arceau (31) de la nacelle (3) concernée est ensuite vérifié, étant précisé qu'au cas où l'arceau (31) n'a pas été verrouillé, le fonctionnement du téléphérique est arrêté.
